# EUROPEAN PATENT APPLICATION

(11) **EP 4 053 325 A1**
(43) Date of publication of application: **07.09.2022**
(21) Application number: 22159569.7
(22) Date of filing: 01.03.2022
(51) Int. Cl.: D06F 39/10, D06F 17/10, D06F 23/04, D06F 37/12, D06F 37/24, D06F 39/08

(54) **BI-DIRECTIONAL RECIRCULATING FILTRATION AND REMOVEABLE FILTRATION APPARATUS FOR LAUNDRY TREATING APPLIANCES**

(30) Priority: 02.03.2021 US 202163155359 P; 28.02.2022 US 202217682787
(71) Applicant: Whirlpool Corporation, Benton Harbor, MI 49022 (US)
(72) Inventor: Badgero, Theron J., 21024 Cassinetta di Biandronno (VA) (IT); Dawange, Jalindar Suresh, 21024 Cassinetta di Biandronno (VA) (IT); Hays, Shawn W., 21024 Cassinetta di Biandronno (VA) (IT); La Mar, Jessica, 21024 Cassinetta di Biandronno (VA) (IT); Morrow, Bradley D., 21024 Cassinetta di Biandronno (VA) (IT); Murphy, Sayer J., 21024 Cassinetta di Biandronno (VA) (IT); Ramasco, Bruno T., 21024 Cassinetta di Biandronno (VA) (IT); Spicer, Thomas D., 21024 Cassinetta di Biandronno (VA) (IT); Strait, Jon D., 21024 Cassinetta di Biandronno (VA) (IT); Vasko, Eric J., 21024 Cassinetta di Biandronno (VA) (IT)
(74) Representative: Spina, Alessandro

(57) **Abstract**

A laundry treating appliance (100, 500, 700) having a removable filtration filter (502, 702 is provided. A treating chamber (32) is defined within a laundry tub (34). A liquid supply and recirculation system (42) is configured to spray water flow (506, 704) into an open top of the treating chamber (32). A removable filtration filter (502, 702) is provided, wherein when attached, the removable filtration filter (502, 702) defines a surface extending above the treating chamber (32), such that pet hair or lint included within the water flow (506, 704) is captured by the removable filtration filter (502, 702).

## Description

### BACKGROUND

### FIELD OF DISCLOSURE

The present disclosure relates to a bi-directional recirculating filtration system for a laundry treating appliance, as well as to variations on a removable filtration apparatus for the laundry treating appliance.

### DESCRIPTION OF RELATED ART

Lint filters are used in washing machines to capture lint on laundry loads after a wash cycle. The captured lint is retained inside the filter, allowing the consumer to clean the filter after a wash cycle is completed. For customers who do not use clothes drying appliances, it is especially important to trap lint during the wash cycle.

### SUMMARY

In one or more embodiments, a bi-directional recirculating filtration system for a laundry treating appliance is provided. The system includes bi-directional pump configured to provide a water flow in either a first recirculation direction, or in a second drain direction; an internal filter; and a treating chamber. In the first recirculation direction, the water flow is pumped into the internal filter at an inlet, flows through filter media to capture pet hair on an inlet side of the filter media, and flows out an outlet to continue along a recirculation path back into the treating chamber, and in the second drain direction, the water flow is pumped is pumped into the internal filter in a reverse direction from the outlet, through the filter media in the reverse direction to free the pet hair captured by the filter media, and out the inlet to continue along a drain path out a drain.

In one or more embodiments, the bi-directional pump includes a first pump arranged to provide the water flow in the first recirculation direction, and a second pump arranged to provide the water flow in the second drain direction.

In one or more embodiments, the bi-directional pump is a single bi-directional pump.

In one or more embodiments, the system further includes a recirculation inlet check valve located between a bottom of the treating chamber and a junction along a recirculation line between the inlet of the internal filter and a drain line; a drain outlet check valve placed along the drain line; and a drain inlet check valve placed between the bottom of the treating chamber and a junction between an outlet of the filter and the recirculation line.

In one or more embodiments, in the first recirculation direction the recirculation inlet check valve is opened to allow flow from the treating chamber into the inlet of the filter; the drain outlet check valve is closed to prevent water flow out the drain; and the drain inlet check valve is closed, thereby allowing filtered water to flow out a recirculation exit and prevent backflow through the filter.

In one or more embodiments, in the second drain direction the recirculation inlet check valve is closed; the drain inlet check valve is opened; and the drain outlet check valve is opened, thereby allowing a water path into the outlet of the filter, through the filter in the reverse direction, and out the drain.

In one or more embodiments, the treating chamber includes an indication of presence of the bi-directional recirculating filtration system.

In one or more embodiments, the system further includes a pumping tower mechanism to generate water flow through a lint filter, the tower mechanism comprising a conduit connecting an input at a bottom of the treating chamber to an outlet on a side of the treating chamber facing into the wash; and a tower filter configured to fit into the outlet, wherein as a drum in the treating chamber rotates, fluid travels into a pumping tower inlet due to rotational force exerted by drum and exits the outlet into the tower filter.

In one or more embodiments, a laundry treating appliance having a balance ring filtration system is provided. The system includes a treating chamber; a balance ring disposed at the top of the treating chamber, the balance ring defining an annular region that rotates with the treating chamber; a liquid supply and recirculation system configured to spray water flow into an open top of the treating chamber; and a pet hair screen selectively attachable to the circumference of the balance ring, wherein when attached, the pet hair screen defines a surface extending within the area bounded by the balance ring, such that pet hair or lint included within the water flow is captured by the pet hair screen.

In one or more embodiments, the pet hair screen is formed of a mesh or other porous material.

In one or more embodiments, the pet hair screen is configured to be removed for cleaning.

In one or more embodiments, a laundry treating appliance having a removable attachment filter system is provided. The system includes a treating chamber; an attachment filter including a filter body configured to hold a filter screen suspended over the treating chamber and defining filter attachments that fit into locators of the laundry treating appliance; and a liquid supply and recirculation system configured to spray water flow into an open top of the treating chamber, wherein when attached, pet hair and other particulates included within the water flow are captured in the filter screen during a wash cycle.

In one or more embodiments, the filter body is composed of plastic.

In one or more embodiments, the filter body is overmolded over a plastic or metal base.

In one or more embodiments, the filter body defines handles to facilitate manipulation of the filter by a user.

In one or more embodiments, the filter attachments include pegs that fit into corresponding apertures of the locators such that the filter body is attachable to the laundry treating appliance upon a downward insertion of the filter attachments into the locators and the filter body is removable from the laundry treating appliance upon an upward removal of the filter attachments from the locators.

In one or more embodiments, a laundry treating appliance having a removable filter cartridge system is provided. The system includes a recirculating filtration system configured to pump wash water through a removable filter cartridge; and a filter receptacle configured to receive the removable filter cartridge.

In one or more embodiments ,the filter cartridge and the filter receptacle are threaded, such that the filter cartridge is insertable into place by twisting the filter cartridge in a first rotational direction into the filter receptacle and the filter cartridge is removable from the filter receptacle by twisting the filter cartridge in the opposite rotational direction.

In one or more embodiments, the removable filter cartridge includes a cartridge body that defines an interior chamber, a cartridge inlet located on the bottom face of the cartridge body extending upward into the interior chamber, a handle at the top of the interior chamber, and a plurality of outlets located around a cylindrical face of the cartridge body and be sized to allow free flow of water and capture of pet hair or other particulate in the water.

In one or more embodiments, a lower portion of the outer surface of the cartridge body forms cartridge threads configured insertable into corresponding receptacle threads of the filter receptacle, the lower portion of the outer surface being circumferentially narrower than an upper portion of the cartridge body to allow for the removable filter cartridge to be tightened down against a seal to form a watertight fit between the filter cartridge and the interior chamber of the filter receptacle.

In one or more embodiments, an underside of the handle forms a handle lip that extends radially outward from the top of the cartridge body, the lower surface of the handle lip being tightenable down on a seal supported by a flange extending radially inward from the filter receptacle into the interior chamber.

In one or more embodiments, the filter receptacle includes a chamber with an open face, a generally planar structure pressable downward into the filter receptacle to cover the open face of the chamber to provide a hermetic seal to the open face of the chamber, and a filter screen extending downward into the chamber and sized to cover the cross-sectional area of the chamber in a flow direction from a receptacle inlet to the plurality of outlets, the filter screen. configured to capture pet hair and other particulate.

In one or more illustrative examples, a flexible filter diaphragm is provided for use in the capture of pet hair, the diaphragm being formed as thin, dome-shaped flexible structure defining radial slits that extend inwards from the dome edge towards the crown of the diaphragm, such that, during a wash cycle, water flows into the dome and out the slits, depositing the pet hair and other particulates within the diaphragm and after the wash cycle, the diaphragm may be snapped to face in an opposite direction to free the pet hair and other particulates from the diaphragm.

In one or more illustrative examples, a recirculating filtration system of a laundry treating appliance is provided. The system includes a filter box having a media chamber configured to hold filter media used to filter pet hair and other particles out of wash water in a treating chamber of the appliance, the filter box including a filter inlet, a filter chamber, and a filter outlet, wherein, during a wash cycle, water flow from a pump of a liquid supply and recirculation system into the filter inlet of the filter box, passes into the filter chamber and through the filter media, and exits the media chamber via the filter outlet.

In one or more embodiments, the system includes a nozzle attached to the filter outlet to direct the water flow into the treating chamber.

In one or more embodiments, the media chamber includes a series of slots into which generally planar elements of filter media are placeable into and secured across the flow direction of the water; a top configured to provide access to the filter media in the interior of the media chamber; and a lid attachable to the filter box to cover and uncover the open top.

In one or more embodiments, the system includes comprising one or more fasteners configured to secure the lid to the filter box.

### BRIEF DESCRIPTION OF THE DRAWINGS

FIG. 1 is a simplified view of a laundry treating appliance having a unidirectional liquid supply and recirculation system;
FIG. 2 is a simplified cross-sectional view of a laundry treating appliance having a bi-directional recirculating filtration system;
FIG. 3 is a simplified cross-sectional view of a laundry treating appliance having an agitator-based removable filter design;
FIG. 4 is a simplified cross-sectional view of a laundry treating appliance having a combination of filter designs;
FIG. 5A is a simplified cross-sectional view of a laundry treating appliance having a balance ring filtration system;
FIG. 5B is simplified top view of the balance ring filtration system of the laundry treating appliance;
FIG. 6A is a simplified cross-sectional view of a laundry treating appliance having a removable recirculating filter;
FIG. 6B is a simplified top view of the laundry treating appliance of FIG. 6A.
FIG. 7A is a simplified top view of a laundry treating appliance having a removable attachment filter;
FIG. 7B is a simplified perspective view of the laundry treating appliance of FIG. 7A;
FIG. 8 is a simplified perspective view of a laundry treating appliance having a removable filter cartridge;
FIG. 9 is a simplified perspective view of a detail of the filter cartridge;
FIG. 10 is a simplified perspective view of a laundry treating appliance having the removable filter cartridge in the inserted state;
FIG. 11 is a simplified cutaway view of the removable filter cartridge as inserted into the filter receptacle;
FIG. 12 is a simplified view of an example flexible filter diaphragm for use in the capture of pet hair.
FIG. 13 is an alternate design for a removable filter cartridge;
FIG. 14 is a cutaway view of yet a further design for a removable filter media for a recirculating filtration system of a laundry treating appliance;
FIG. 15 is a side cutaway view of the recirculating filtration system of FIG. 14; and
FIG. 16 is a top view of the recirculating filtration system of FIG. 14.

### DETAILED DESCRIPTION

Embodiments of the present disclosure are described herein. It is to be understood, however, that the disclosed embodiments are merely examples and other embodiments can take various and alternative forms. The figures are not necessarily to scale; some features could be exaggerated or minimized to show details of particular components. Therefore, specific structural and functional details disclosed herein are not to be interpreted as limiting, but merely as a representative basis for teaching one skilled in the art to variously employ the embodiments. As those of ordinary skill in the art will understand, various features illustrated and described with reference to any one of the figures can be combined with features illustrated in one or more other figures to produce embodiments that are not explicitly illustrated or described. The combinations of features illustrated provide representative embodiments for typical applications. Various combinations and modifications of the features consistent with the teachings of this disclosure, however, could be desired for particular applications or implementations.

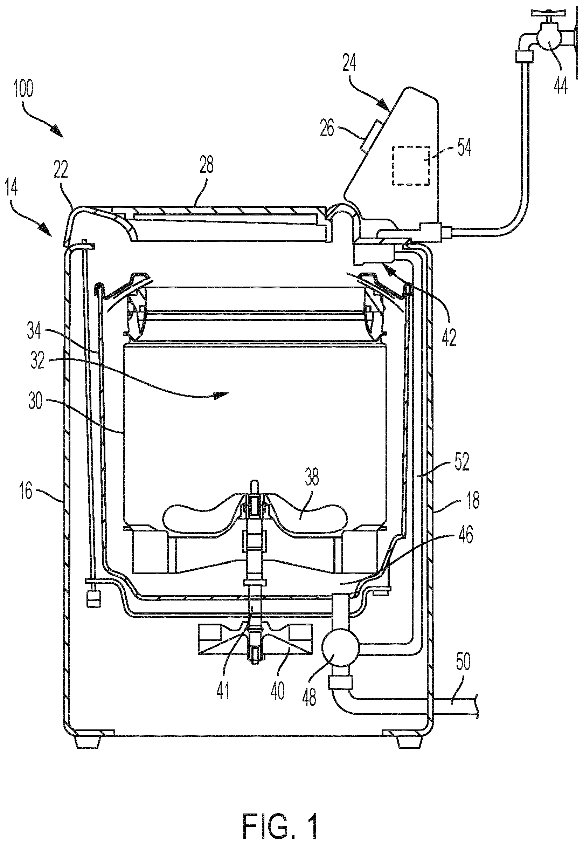

FIG. 1 is a simplified view of a laundry treating appliance 100 having a unidirectional liquid supply and recirculation system 42. The laundry treating appliance 100 may be any machine that treats articles such as clothing or fabrics. Examples of the laundry treating appliance 100 may include, but are not limited to, a vertical axis washing machine; a vertical axis dryer (such as a tumble dryer or a stationary dryer), a tumbling or stationary refreshing/revitalizing machine, an extractor, a non-aqueous washing apparatus, and a revitalizing machine. As used herein, the term "vertical-axis" washing machine refers to a washing machine having a rotatable drum that rotates about a generally vertical axis relative to a surface that supports the washing machine. However, the rotational axis need not be perfectly vertical to the surface. For example, the drum may rotate about an axis inclined relative to the vertical axis (e.g., with fifteen degrees of inclination being one example of the inclination).

As illustrated in FIG. 1, the laundry treating appliance 100 includes a cabinet 14 defined by a front wall 16, a rear wall 18, a pair of side walls (not shown) and supporting a top wall 22. A user interface 24 on the cabinet 14 may have multiple controls 26, which may be used to select a cycle of operation. A chassis (not shown) may be provided, with the walls mounted to the chassis.

The top wall 22 may have an openable lid or door 28 and may be selectively moveable between opened and closed positions to close an opening in the top wall 22. In the opened position, the door 28 provides access to the interior of the cabinet 14. A rotatable drum 30 is disposed within the interior of the cabinet 14 and defines a treating chamber 32 for treating laundry. The drum 30 may be positioned within an imperforate tub 34. The drum 30 itself may include a plurality of perforations (not shown), such that liquid may flow between the tub 34 and the drum 30 through the perforations. A clothes mover 38 may be located in the drum 30 to impart mechanical agitation to a load of clothing articles placed in the drum 30.

The drum 30 and/or the clothes mover 38 may be driven by an electrical motor 40 operably connected to the drum 30 and/or the clothes mover 38 by a drive shaft 41. The clothes mover 38 may be oscillated or rotated about its axis of rotation during a cycle of operation in order to produce high water turbulence effective to wash the load contained within the treating chamber 32. The motor 40 may rotate the drum 30 at various speeds in either rotational direction.

The liquid supply and recirculation system 42 may be provided to spray treating liquid, such as water or a combination of water and one or more wash aids, such as detergent, into the open top of the drum 30 and onto the top of a laundry load placed within the treating chamber 32. The liquid supply and recirculation system 42 may be configured to supply treating liquid directly from a household water supply 44 and/or from the tub 34 and spray it onto the fabric load. The liquid supply and recirculation system 42 may also be configured to recirculate treating liquid from the tub 34, including a sump 46, and spray it onto the top of the load. A pump 48 may be housed below the tub 34. The pump 48 may have an inlet fluidly coupled to the sump 46 and an outlet configured to fluidly couple to either or both a household drain 50 or a recirculation conduit 52. In this configuration, the pump 48 may be used to drain or recirculate wash water in the sump 46, which is initially sprayed into the drum 30, flows through the drum 30, and then into the sump 46.

The laundry treating appliance 100 may further comprise a controller 54 coupled to various working components of the laundry treating appliance 100, such as the motor 40 and the pump 48, to control the operation of the working components. The user interface 24 may be coupled to the controller 54 and may provide for input/output to/from the controller 54. In other words, the user interface 24 may allow a user to enter input related to the operation of the laundry treating appliance 100, such as selection and/or modification of an operation cycle of the laundry treating appliance 100, and receive output related to the operation of the laundry treating appliance 100. Examples, without limitation, of cycles of operation include: wash, heavy duty wash, delicate wash, quick wash, refresh, rinse only, and timed wash. Any suitable controller 54 may be used. The specific type of controller is not germane to the invention. It is contemplated that the controller 54 may be a microprocessor-based controller that implements control software and sends/receives one or more electrical signals to/from each of the various components to effect the control software. As an example, proportional control (P), proportional integral control (PI), and proportional derivative control (PD), or a combination thereof, a proportional integral derivative (PID) control, may be used to control the various components.

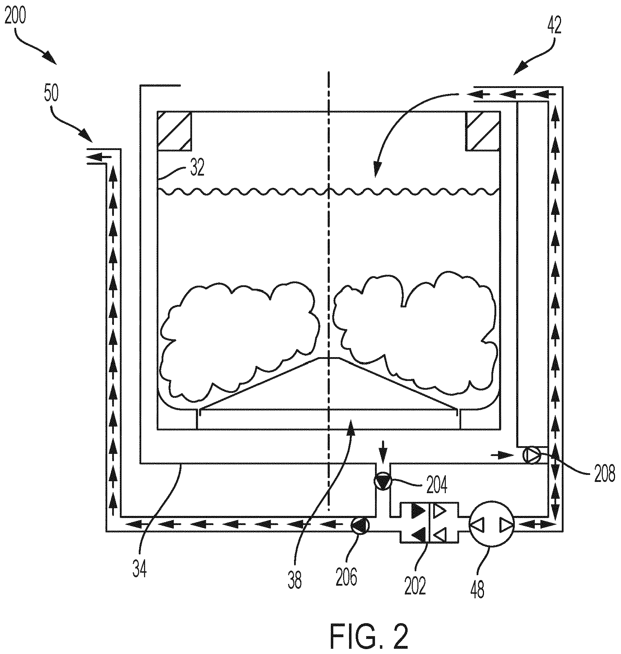

FIG. 2 is a simplified cross-sectional view of a laundry treating appliance 200 having a bi-directional recirculating filtration system. The laundry treating appliance 200 may be used with an internal filter 202 to collect pet hair and then dispose of the hair at the end of the cycle via the drain 50. This may avoid a need for the consumer to physically interact with the captured pet hair.

A bi-directional pump 48 may be used to pump water through internal plumbing of the laundry treating appliance 200 in two opposite flow directions. In particular, the pump 48 may provide the flow in either a first, recirculation direction, or in a second, drain direction. In the first recirculation direction, water is passed into the internal filter 202 at an inlet, flows through filter media to capture pet hair on the inlet side of the filter media, and flows out an outlet to continue along a recirculation path back into the treating chamber 32. In the second, drain direction, water is passed into the internal filter 202 in a reverse direction from the outlet, through the filter media in a reverse direction to free the pet hair captured by the filter media, and out the inlet to continue along the drain path out the drain 50. It should be noted that the bi-directional pump 48 may also be implemented as two pumps 48 arranged in opposite directions, in some examples.

A series of check valves 204, 206, 208 may be used promote flow in the selected direction (*i.e*., to prevent backflow). These check valves 204, 206, 208 may be implemented as various types of valve, such as flapper valves, ball valves, etc. A recirculation inlet check valve 204 may be placed between the bottom of the tub 34 and a junction between the inlet of the internal pet hair filter 202 and the drain 50. A drain outlet check valve 206 may be placed along the drain 50 line. A drain inlet check valve 208 may be placed between the bottom of the tub 34 and a junction between outlet of the filter 202 and the recirculation line 42.

In the first, recirculation direction, the recirculation inlet check valve 204 may be opened to allow flow from the tub 34 into the inlet of the filter 202. The drain outlet check valve 206 may be closed to prevent water flow out the drain 50. The drain inlet check valve 208 may also be closed to allow the filtered water to flow out the recirculation 42 exit, and to prevent backflow through the filter 202. Thus, when the pump 48 is activated in the first direction, as hair is lifted off of fabric 210 during wash and spin cycles, the hair is transported by free water through the basket wrapper and into the filter 202. There can also be significant transport of hair between the clothes mover 38 and a static buffer attached to basket wrapper.

In the second, drain direction, the recirculation check valve 204 is closed, but the drain inlet check valve 206 and the drain outlet check valve 208 are opened. This allows for a water path into the outlet of the filter 202, through the filter 202 in a reverse direction, and out the drain 50. Thus, when the pump 48 is activated in the second direction, the hair collected in the filter 202 is flushed out of the filter 202 media. This accordingly allows for the laundry treating appliance 100 to eliminate hair from the wash without consumer interaction with the pet hair.

The bi-directional recirculating filtration system may, in some examples, be paired with visible features on the basket wrapper. For instance, the internal filter 202 system may be combined with a differentiating basket hole pattern and/or a differentiating basket wall buffer (e.g., with a similar aesthetic to a lifter) to provide a visually demonstrable difference for laundry treating appliances 200 including the bi-directional recirculating filtration system. This may allow a customer to be made aware that the laundry treating appliance 200 implements the bi-directional recirculating filtration system 102, even though the system 102 may be hidden within the internals of the laundry treating appliance 200.

In some examples, the bi-directional recirculating filtration system 102 may be implemented in combination with additional pet hair filtration. For instance, the laundry treating appliance 200 may further include a pumping tower mechanism to generate water flow through a lint filter. In such a design, a conduit connects an input at the bottom of the washing machine to an outlet on the side of the drum facing into the wash. A filter mechanism fits into the outlet. As the drum rotates, fluid travels into the pumping tower inlet because of the rotational force exerted by the clothes mover 38 and exits the outlet into the filter. When the wash cycle is complete, the filter may be removed from the outlet and cleaned or replaced. This, and/or other customer-accessible filters may be combined with the bi-directional recirculating filtration system to further reduce the deposit of pet hair on wash articles.

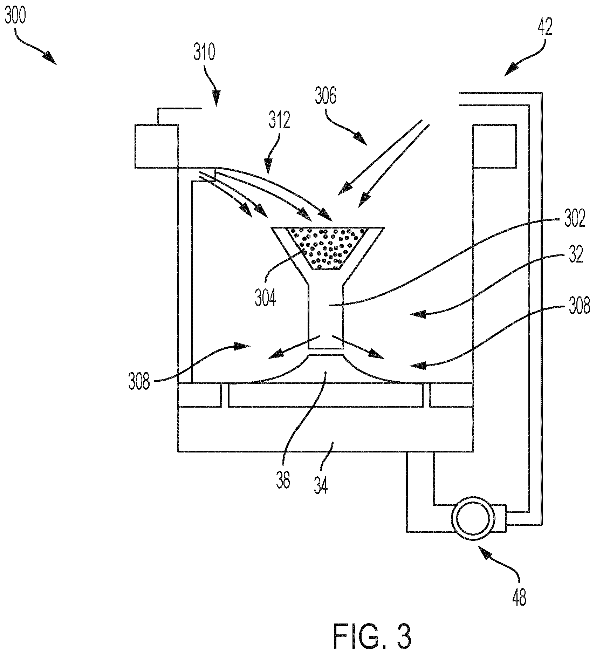

FIG. 3 is a simplified cross-sectional view of a laundry treating appliance 300 having an agitator-based removable filter design. In this example, the agitator 302 defines an interior that is configured to receive and to function as a filter 304, such as for pet hair and/or lint. While the lint filter 304 is illustrated herein as being provided within the interior of the agitator 302, it will be understood that the filter 304 could be at other locations and still be associated with the agitator 302, examples of which include at a top cap of the agitator 302, or on an outer surface of the agitator 302.

As shown, a water flow 306 via the pump 48 may exit the liquid supply and recirculation system 42 and enter the filter 304 portion of the agitator 302. This water flow 306 may deposit any included pet hair into the filter 304 and continue on back into the tub 34 as water flow 308. In another example, the laundry treating appliance 300 may include a pumping tower mechanism 310 to generate a water flow 312, as mentioned above. This mechanism too may additionally or alternately provide the water flow 312 into the filter 304 to capture pet hair, allowing the cleaned water to flow back into the tub 34 as the water flow 308. After the wash cycle is complete, the filter 304 may be removed and cleaned of any pet hair or lint that may have been deposited therein.

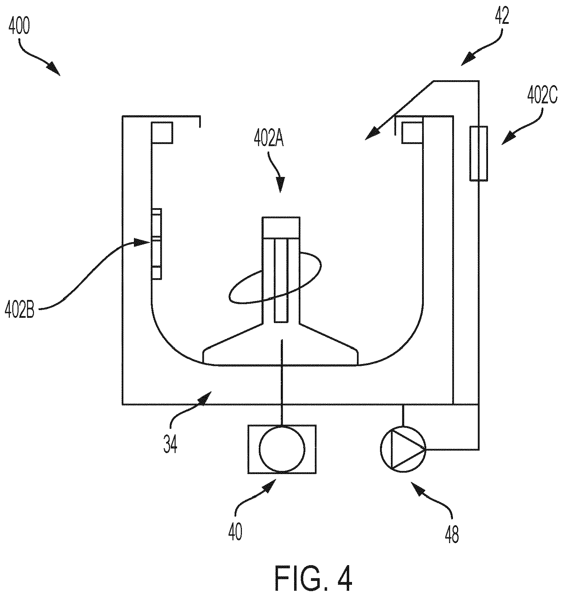

FIG. 4 is a simplified cross-sectional view of a laundry treating appliance 400 having a combination of filter designs. As shown, the laundry treating appliance 400 includes a filter 402A, a filter 402B, and a filter 402C. The filter 402A may be an agitator-based removable filter design, such as discussed above with respect to FIG. 3. The filter 402B may be a pumping tower design, such as discussed above with respect to FIGS. 2 and 3.

The filter 402C may be an inline filter, similar to the internal pet hair filter 202 discussed with respect to FIG. 2, although without the bi-directional flow capability. Instead, the filter 402C may be included within the water flow path of the liquid supply and recirculation system 42 between the pump 48 and the recirculation output back into the tub 34. As such, the filter 402C may be removed from time to time, to allow the filter 402C to be cleared of collected pet hair and lint.

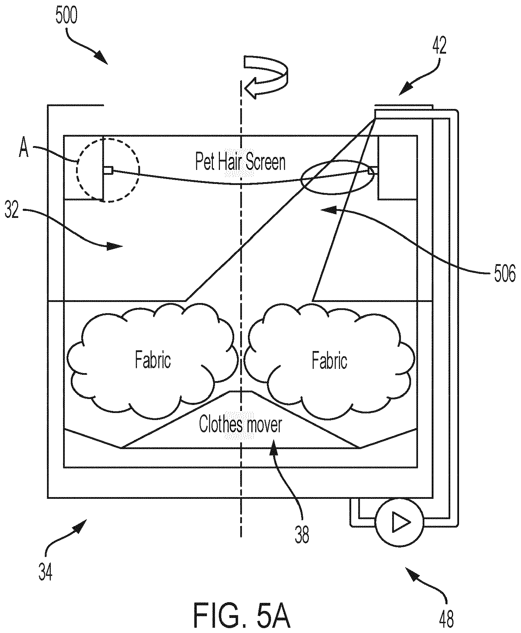

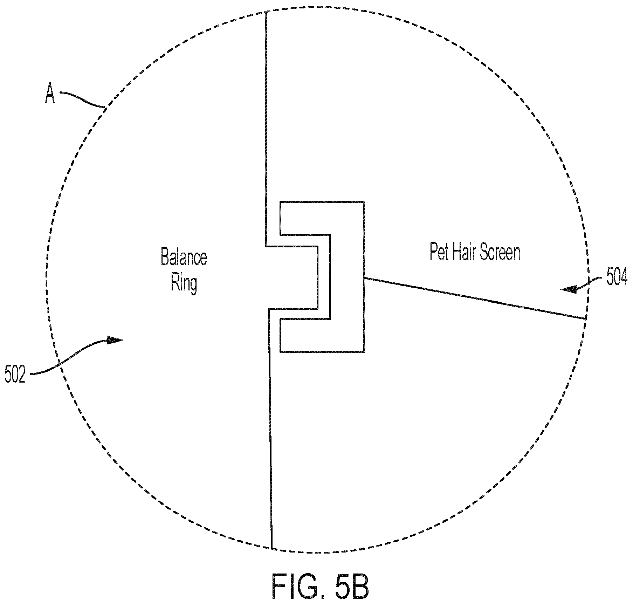

FIG. 5A is a simplified cross-sectional view of a laundry treating appliance 500 having a balance ring filtration system. FIG. 5B is simplified top view of the balance ring filtration system of the laundry treating appliance 500. It can be observed that during operation of a laundry treating appliance 500, particularly during spin cycles, the laundry treating appliance 500 can sometimes experience vibration. This may be caused, for example, by irregular placement of fabric or other objects that are being washed. After a washing cycle and the draining of the treating chamber 32, these items can stick together and cause differences in the center of mass inside the treating chamber 32. To prevent such an imbalance, the laundry treating appliance 500 may be equipped with a balance ring 502 to the top of the treating chamber 32. The balance ring 502 may define an annular region that rotates with the treating chamber 32. A weight such a liquid or solid balls may be included within the region, such that during operation, the weight will move to a position within the ring that counters the centrifugal forces created by the articles fabric in the wash. Thus, the weight of the balance ring 502 moves to counterweight the rotation of the treating chamber 32, reducing or eliminating the vibration.

The balance ring 502 may further operate as a base for a removable filter. A pet hair screen 504 may be formed of a mesh or other porous material and may be attachable to the circumference of the balance ring 502. When attached, the pet hair screen 504 may define a surface extending within the area bounded by the balance ring 502. The pet hair screen 504 may cover all or at least a part of the treating chamber 32 opening.

As the liquid supply and recirculation system 42 sprays water flow 506 into the open top of the treating chamber 32 and onto the top of a laundry load placed within the treating chamber 32, pet hair or lint included within the water flow 506 may be captured by the pet hair screen 504. Once the wash cycle is complete, the pet hair screen 504 may be removed for cleaning.

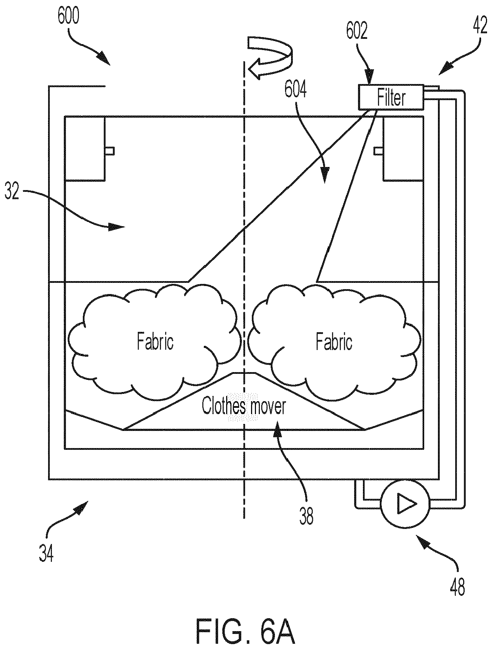

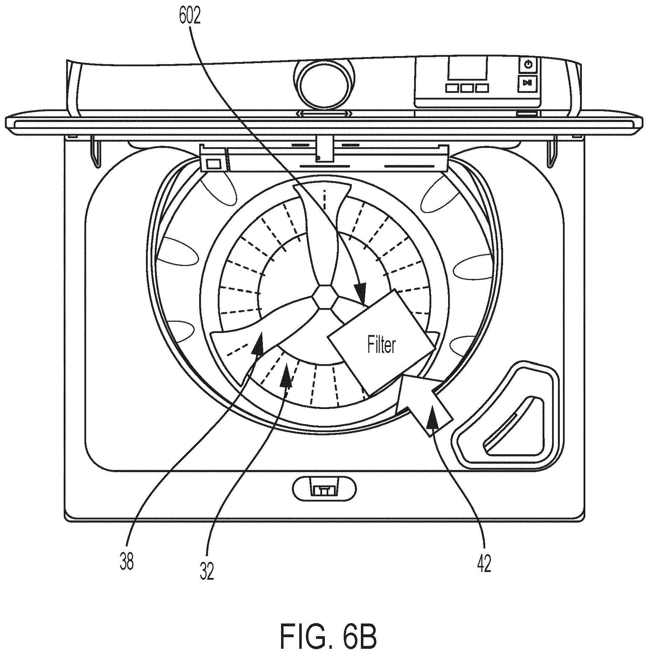

FIG. 6A is a simplified cross-sectional view of a laundry treating appliance 600 having a removable recirculating filter 602. FIG. 6B is a simplified top view of the laundry treating appliance 600. Referring collectively to FIGS. 6A and 6B, the removable recirculating filter 602 may include various filter media, such as a mesh, a sponge, fingers, or another structure configured to capture pet hair, lint, or other particles while allowing the water flow 604 to proceed with minimal or at least with acceptable back pressure. The removable recirculating filter 602 may be selectively attachable to the exit of the liquid supply and recirculation system 42. This may allow the removable recirculating filter 602 to capture pet hair as the pump 48 recirculates water and be removed from the laundry treating appliance 600 for cleaning.

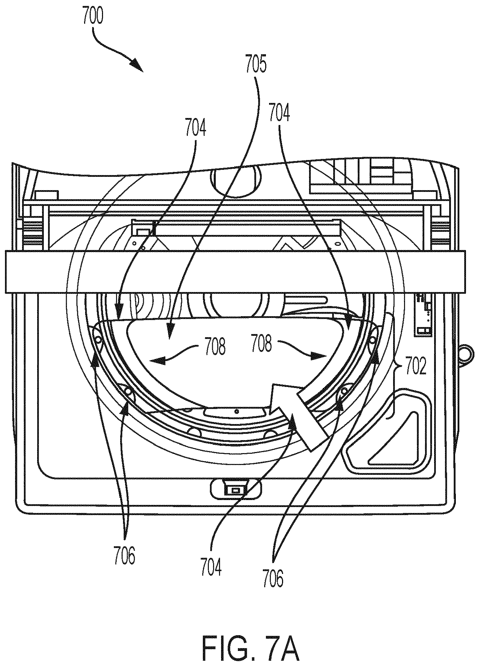

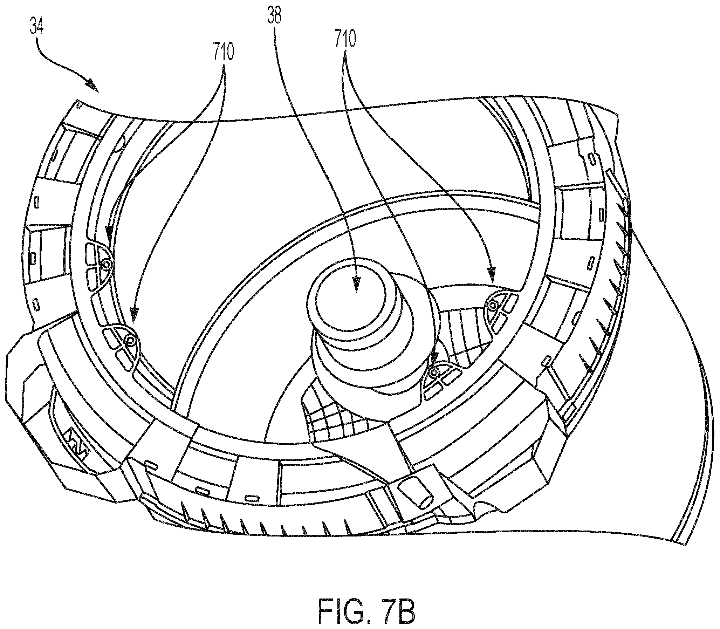

FIG. 7A is a simplified top view of a laundry treating appliance 700 having a removable attachment filter. FIG. 7B is a simplified perspective view of the laundry treating appliance 700. Referring collectively to FIGS. 7A and 7B, the attachment filter 702 includes a filter body 704. The filter body 704 may be composed of plastic, or, in some case may be overmolded over a plastic or metal base to add rigidity.

The filter body 704 may be configured to hold a filter screen 705 suspended over the treating chamber 32. The filter screen 705 has a substantially planar surface formed as a mesh or other porous material through which water may pass but pet hair or other particulates may be retained. For example, filter body 704 may define a perimeter within which the filter screen 705 is retained.

The filter body 704 may also define handles 706 to facilitate the manipulation of the filter by a user. The handles 706 may be relatively thicker areas of the filter body 704 that allow a consumer to hold onto the rigid filter body 704 as opposed to handling the filter screen 705.

The filter body 704 may also define filter attachments 708 for selective attachment to corresponding locators 710 of the laundry tub 34. For instance, the filter attachments 708 may include pegs that fit into corresponding apertures of the locators 710 such that the filter 702 may be attached to the tub 34 upon a downward insertion of the filter attachments 708 into the locators 710. Similarly, the filter 702 may be removed from the tub 34 upon an upward removal of the filter attachments 708 from the locators 710.

The liquid supply and recirculation system 42 may provide a water flow 712 onto the filter screen 705, allowing pet hair and other particulates to be captured in the filter screen 705 during a wash cycle, and further allowing the cleaned water to continue down into the treating chamber 32. When the wash cycle is completed, the filter attachments 708 may be removed from the locators 710, and the filter screen 705 may be cleaned. To perform a next wash cycle, the filter attachments 708 may be reattached to the locators 710.

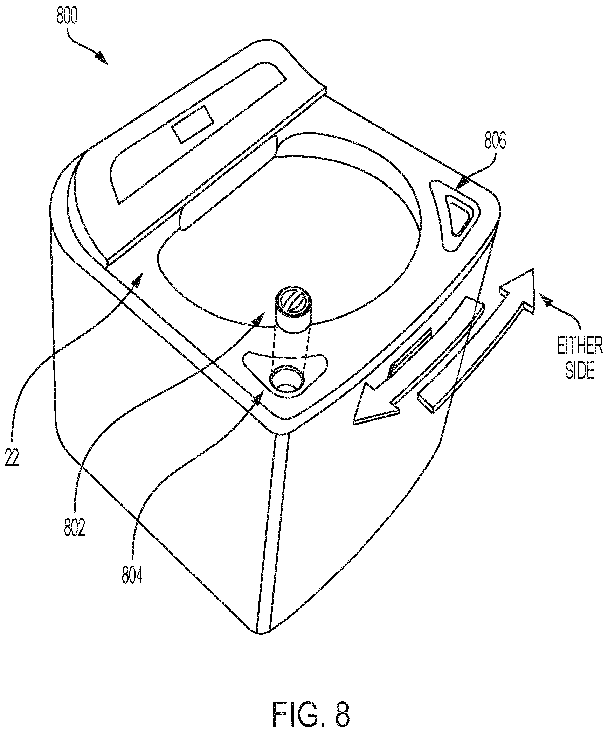

FIG. 8 is a simplified perspective view of a laundry treating appliance 800 having a removable filter cartridge 802. As shown in FIG. 8, the removable filter cartridge 802 is in a detached state. The removable filter cartridge 802 may be inserted into a corresponding filter receptacle 804 of the laundry treating appliance 800. The filter receptacle 804 may be placed at a user-accessible location, such as on the top wall 22 of the laundry treating appliance 800. In some cases, the user-accessible location may be under the openable lid or door 28 (not shown in FIG. 8) and may be covered when the door is in the closed position and uncovered when the door is in the opened position. In some examples, the top wall 22 of the laundry treating appliance 800 may further include a wash aid opening 806 for the addition of wash aids, such as detergents and/or bleach. It should be noted that the locations of the filter receptacle 804 and wash aid opening 806 may vary. For instance, the locations of the filter receptacle 804 and wash aid opening 806 as illustrated may be reversed.

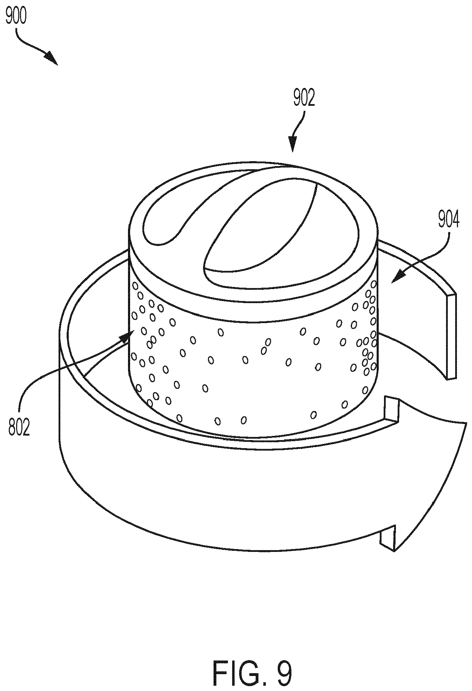

FIG. 9 illustrates a simplified perspective view of a detail of the filter cartridge 802. As shown, the filter cartridge 802 generally includes a handle portion 902, and a filter media portion 904. The handle portion 902 may include a grip portion to facilitate the manipulation of the filter cartridge 802 for insertion into and removal from the filter receptacle 804. The filter media portion 904 may include various reusable and non-reusable filter media, such as sponges, charcoal, meshes and perforated sheets.

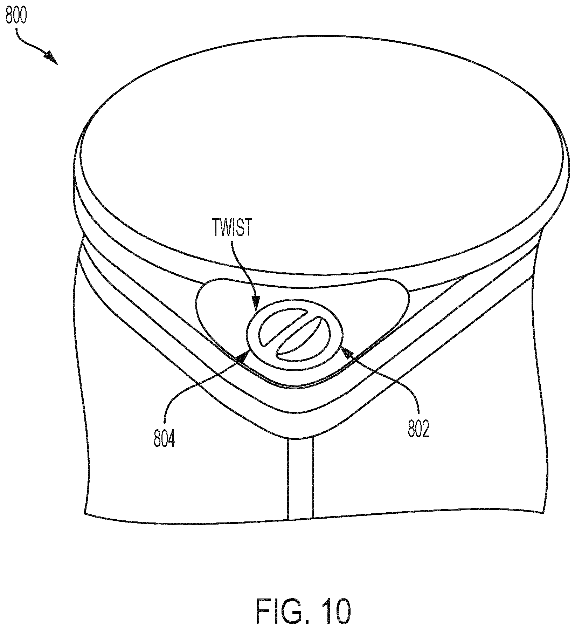

FIG. 10 is a simplified perspective view of a laundry treating appliance 800 having the removable filter cartridge 802 in the inserted state. In an example, the filter cartridge 802 and filter receptacle 804 may be threaded, such that the filter cartridge 802 may be inserted into place by twisting the filter cartridge 802 into the filter receptacle 804 (e.g., clockwise). Similarly, the filter cartridge 802 may be removed from the filter receptacle 804 by twisting the filter cartridge 802 in the opposite direction (e.g., counterclockwise).

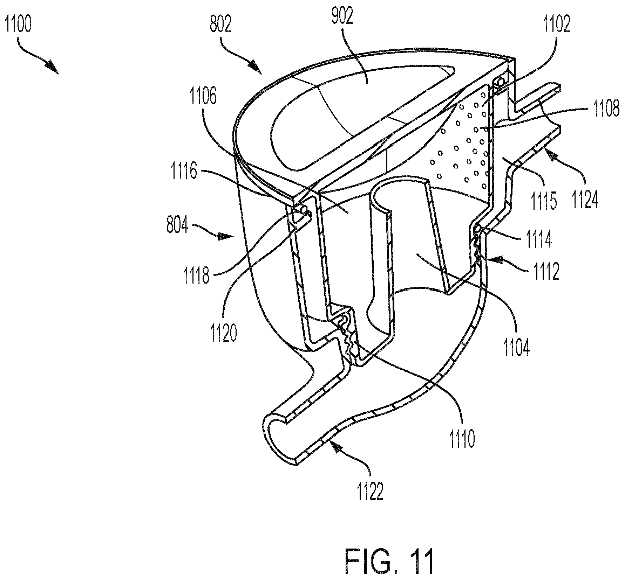

FIG. 11 is a simplified cutaway view of the removable filter cartridge 802 as inserted into the filter receptacle 804. The removable filter cartridge 802 has a cartridge body 1102 that defines a cartridge inlet 1104, an interior chamber 1106, and a plurality of outlets 1108. The cartridge body 1102 may be roughly cylindrical, with the handle 902 forming the top of interior chamber 1106. The plurality of outlets 1108 may be located around the cylindrical face of the cartridge body 1102 and may be sized to allow the free flow of water, but also to capture pet hair or other particulate in the water. The cartridge inlet 1104 may be located on the bottom face of the cartridge body 1102, opposite the handle 902, and may extend upward into the interior chamber 1106. While the interior chamber 1106 is illustrated as being empty, it should be noted that the interior chamber 1106 may include additional filter media in some examples.

As noted above, the filter cartridge 802 may be inserted by twisting the filter cartridge 802 into the filter receptacle 804. To accommodate the filter cartridge 802, a lower portion of the outer surface of the cartridge body 1102 may form cartridge threads 1110 that may be screwed into corresponding receptacle threads 1112 of the filter receptacle 804. The lower portion of the outer surface may be circumferentially narrower than the upper portion of the cartridge body 1102, to allow for the removable filter cartridge 802 to be tightened down against a first seal 1114, such as an O-ring, to form a watertight fit between the filter cartridge 802 and the interior chamber 1115 of the filter receptacle 804. This ensures that water flows into the cartridge inlet 1104, through the interior chamber 1106, and out the plurality of outlets 1108, without bypassing the filter cartridge 802.

The underside of the handle 902 may include a handle lip 1116 that extends radially outward from the top of the cartridge body 1102. The lower surface of the handle lip 1116 may tighten down on a seal 1118, such as an O-ring, supported by a flange 1120 extending radially inward from the filter receptacle 804 into the receptacle chamber 1115.

Thus, when installed, water from the pump 48 may flow into the receptacle inlet 1122, upwards into the interior chamber 1106 of the removable filter cartridge 802 via the cartridge inlet 1104, radially outward through the cartridge outlets 1108 into the receptacle chamber 1115, and finally out the receptacle outlet 1124.

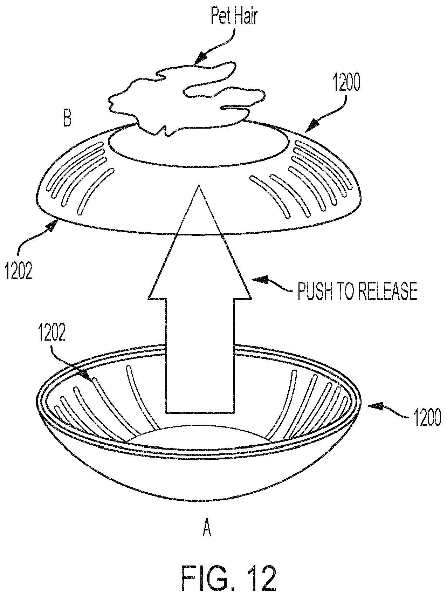

FIG. 12 is an example flexible filter diaphragm 1200 for use in the capture of pet hair. The diaphragm 1200 may be a thin, dome-shaped structure manufactured out of a flexible material such as a rubber or plastic. The diaphragm 1200 may define radial slits 1202 along the diaphragm 1200 body that extend inwards from the dome edge towards the crown. The dome may be installed in a filter facing outward in a convex direction (as shown in state A), such that, during a wash cycle water flows into the dome and out the slits 1202, depositing pet hair and other particulates within the diaphragm 1200. Once the wash is complete, the diaphragm 1200 may be removed from the filter and cleaned. Due to the flexible nature of the diaphragm 1200, the diaphragm 1200 may be snapped to face in the opposite direction (as shown in state B), freeing the accumulated pet hair and other particulates from the filter. The filter may then be reused for further wash cycles.

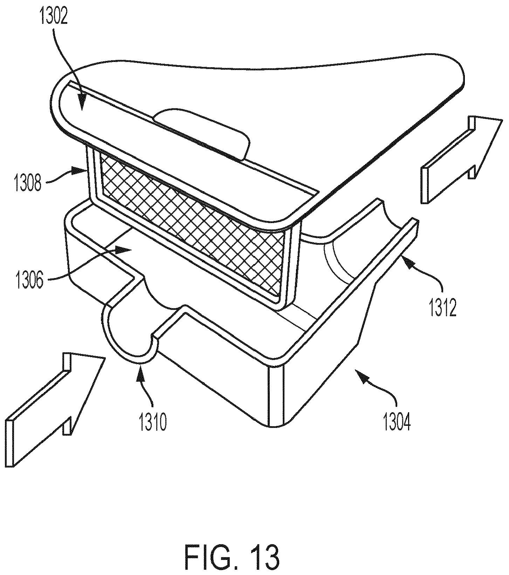

FIG. 13 is an alternate design for a removable filter cartridge 1302. As shown in FIG. 13, the removable filter cartridge 1302 is in a detached state. The removable filter cartridge 1302 may be inserted into a corresponding filter receptacle 1304 of the laundry treating appliance (not shown). The filter receptacle 1304 may be placed at a user-accessible location, such as on the top wall of the laundry treating appliance. In some cases, the user-accessible location may be under the openable lid or door and may be covered when the door is in the closed position and uncovered when the door is in the opened position.

The filter receptacle 1304 may have a chamber 1306 with an open face, and the filter cartridge 1302 may have a generally planar structure that can be pressed downward into the filter receptacle 1304 to cover the open face of the chamber 1306 to provide a hermetic seal to the open face of the chamber 1306.

The filter cartridge 1302 may further include a filter screen 1308 extending downward into the chamber 1306. The filter screen 1308 may be formed of a mesh or other porous material through which water may flow through, but pet hair and other particulate may be deposited. The filter screen 1308 may be sized to cover the cross-sectional area of the chamber 1306 in a flow direction from a receptacle inlet 1310 to a receptacle inlet 1312.

Thus, when installed, during the wash cycle, water from the pump 48 may flow into a receptacle inlet 1310, into the chamber 1306 of the filter receptacle 1304, through the filter screen 1308, and out through the receptacle outlet 1314. Once the wash is complete, the filter cartridge 1302 may be removed from the filter receptacle 1304 and the filter screen 1308 may be cleaned.

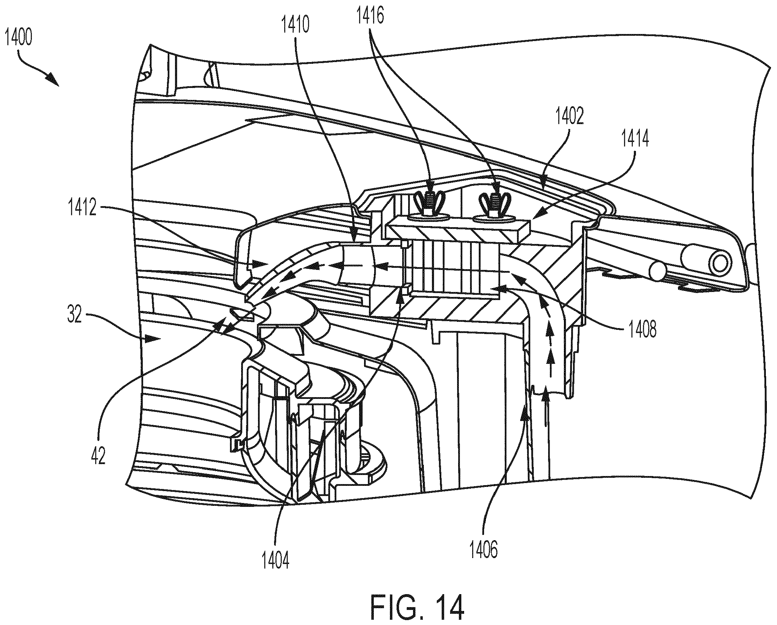

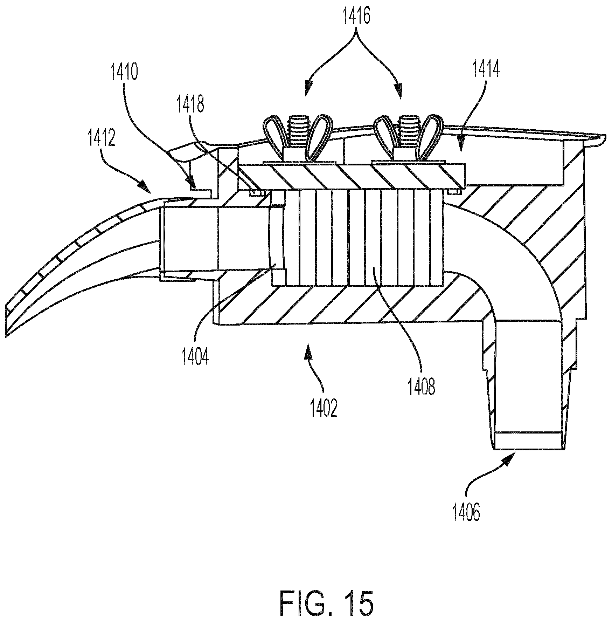

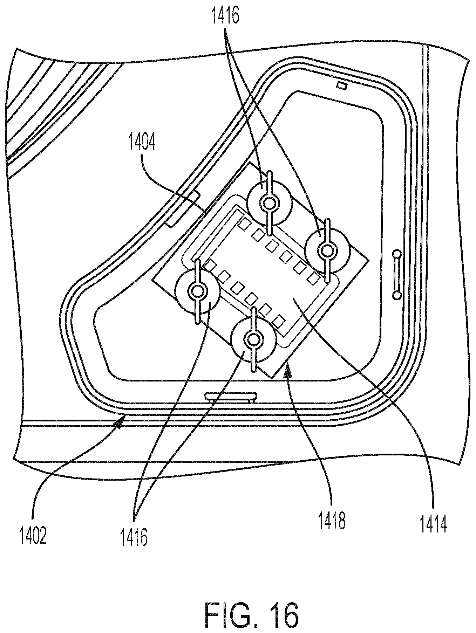

FIG. 14 is a cutaway view of yet a further design for a removable filter media for a recirculating filtration system of a laundry treating appliance 1400. FIG. 15 is a side cutaway view of the recirculating filtration system. FIG. 16 is a top view of the recirculating filtration system. Referring collectively to FIGS. 14, 15, and 16, the recirculating filtration system may include a filter box 1402 having a media chamber 1408 configured to hold filter media 1404 used to filter pet hair and other particles out of wash water. The filter media 1404 may include mesh, a sponge, fingers, or other structure configured to capture pet hair, lint, or other particles while allowing the water flow to proceed with minimal or at least with acceptable back pressure

The filter box 1402 may include a filter inlet 1406, a filter chamber 1106, and a filter outlet 1410. During a wash cycle, water flow from the pump 48 (not shown) of the liquid supply and recirculation system 42 enters the filter inlet 1406 of the filter box 1402, passes into the filter chamber 1408 and through the filter media 1404, and then exits the media chamber 1408 via the filter output 1410. The internal dimensions of the filter media 1404 may be made as flush as possible with the internal dimensions of the filter output 1410 and the filter inlet 1406, to reduce the possibility of standing water remaining in the media chamber 1408 after use.

A nozzle 1412 may be attached to the filter output 1410 to direct the water flow into the treating chamber 32. In an example, the nozzle 1412 may be formed of a flexible plastic or rubber that attaches to an exterior of the filter output 1410 via a slip fit.

The media chamber 1408 of the filter box 1402 may have an open top to provide access to the interior of the media chamber 1408. This may allow a consumer to inspect, remove, clean, and/or replace the filter media 1404 included in the media chamber 1408. In one example, the media chamber 1408 may include a series of slots into which generally planar elements of filter media 1404 may be lowered into and secured across the flow direction of the water.

During a wash cycle, a lid 1414 may be attached to the filter box 1402 to cover the open top. The lid 1414 may have a lower surface contoured to the shape of the upper surface of the open top, such that a watertight seal may be formed between the lid 1414 and the filter body 1402. One or more fasteners 1416 may be used to secure the lid 1414 to the filter body 1402. For example, a plurality of bolts may extend upwards from the filter box 1402, and the lid 1414 may have corresponding openings to allow the lid to align via the bolts for securing to the filter body 1402. The lid 1414 may then be tightened down with wing nuts or another user-friendly fastener to form a watertight connection to the media chamber 1408. A seal 1418, such as an O-ring, may also be provided in a channel around the perimeter of the top opening, to allow the lid 1414 to be tightened down against seal 1418 to form the watertight fit between the lid 1414 and media chamber 1408. When the wash cycle is complete, the lid 1414 may be removed from the filter box 1402 and the filter media 1404 may be removed, cleaned, or replaced.

Accordingly, disclosed herein are filter systems for laundry treating appliances for collecting pet hair, lint, and other debris from water within the drum of the appliance.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

## Claims

1. A laundry treating appliance (100, 500, 700) comprising:
a treating chamber (32) within a laundry tub (34);
a liquid supply and recirculation system (42) configured to spray water flow (506, 704) into an open top of the treating chamber (32); and
a removable filtration filter (502, 702),
wherein when attached, the removable filtration filter (502, 702) defines a surface extending above the treating chamber (32), such that pet hair or lint included within the water flow (506, 704) is captured by the removable filtration filter (502, 702).

2. The laundry treating appliance (100, 500) of claim 1, wherein the removable filtration filter includes:
a balance ring (502) disposed at the top of the treating chamber (32), the balance ring (502) defining an annular region that rotates with the treating chamber (32)

3. The laundry treating appliance (100, 500) of claim 2, wherein the removable filtration filter includes a pet hair screen (504) selectively attachable to the circumference of the balance ring (502),
wherein when attached, the pet hair screen (504) defines a surface extending within the area bounded by the balance ring (502), such that pet hair or lint included within the water flow (306, 308, 312, 604, 712) is captured by the pet hair screen (504).

4. The laundry treating appliance (100, 500) of claim 2, wherein the balance ring (502) includes a weight within the annular region, such that during operation, the weight will move to a position within the ring that counters centrifugal forces created by article in the treating chamber (32).

5. The laundry treating appliance (100, 500) of claim 4, wherein the weight of the balance ring (502) is configured to move to counterweight the rotation of the treating chamber (32), thereby reducing or eliminating vibration of the laundry treating appliance (100, 500).

6. The laundry treating appliance (100, 500) of claim 3, wherein the pet hair screen (504) is formed of a mesh or other porous material.

7. The laundry treating appliance (100, 500) of claim 3 or 6, wherein the pet hair screen (504) is configured to be removed for cleaning.

8. The laundry treating appliance (100, 700) of claim 1, wherein the removable filtration filter includes:
an attachment filter (702) including a filter body (704) configured to hold a filter screen (705) suspended over the treating chamber (32) and defining filter attachments (708) that fit into locators (710) of the laundry treating appliance (100, 700),
wherein when attached, pet hair and other particulates included within the water flow (712) are captured in the filter screen (705) during a wash cycle.

9. The laundry treating appliance (100, 700) of claim 8, wherein the filter body (704) is composed of plastic.

10. The laundry treating appliance (100, 700) of any of claims 8 to 9, wherein the filter body (704) is overmolded over a plastic or metal base.

11. The laundry treating appliance (100, 700) of any of claims 8 to 10, wherein the filter body (704) defines handles (706) to facilitate manipulation of the filter (702) by a user.

12. The laundry treating appliance (100, 700) of claim 11, wherein the handles (706) are thicker areas of the filter body (704).

13. The system of any of claims 8 to 12, wherein the filter body (704) defines a perimeter within which the filter screen (705) is retained.

14. The system of any of claims 8 to 13, wherein the filter attachments (708) include pegs that fit into corresponding apertures of the locators (710) such that the filter body (704) is attachable to the laundry treating appliance (100, 700) upon a downward insertion of the filter attachments (708) into the locators (710) and the filter body (704) is removable from the laundry treating appliance (100, 700) upon an upward removal of the filter attachments (708) from the locators (710).
